# EUROPÄISCHE PATENTSCHRIFT

(11) **EP 2 687 824 B1**
(45) Veröffentlichungstag und Bekanntmachung des Hinweises auf die Patenterteilung: **14.06.2023**
(21) Anmeldenummer: 13003369.9
(22) Anmeldetag: 03.07.2013
(51) Int. Cl.: G01F 1/56, G01F 25/00, G01F 1/716, G01F 1/74, G01F 5/00

(54) **Kernmagnetisches Durchflussmessgerät**
Nuclear magnetic flow meter
Débitmètre à noyau magnétique

(30) Priorität: 16.07.2012 DE 102012013933
(43) Veröffentlichungstag der Anmeldung: 22.01.2014
(73) Patentinhaber: Krohne AG, 4019 Basel (CH)
(72) Erfinder: Bousché, Olaf Jean Paul, 3319 PH Dordrecht (NL); Hogendoorn, Cornelis Johannes, 4211 BG Spijk (NL); Zoeteweij, Marco Leendert, 3344 EP Hendrik-Ido-Ambach (NL)
(74) Vertreter: Gesthuysen Patentanwälte

(56) Entgegenhaltungen:
- US-A- 3 270 549
- US-A- 3 425 262
- US-A- 4 862 080
- US-A- 6 152 177
- US-A1- 2011 301 899

## Beschreibung

Die Erfindung betrifft ein Kalibrierverfahren für ein kernmagnetisches Durchflussmessgerät.

Zu einem kernmagnetischen Durchflussmessgerät gehört zunächst, funktionsnotwendig, ein von einem mehrphasigen Medium durchströmbares Messrohr, das an ein in Strömungsrichtung des Mediums vor dem Messrohr angeordnetes Einlaufrohr und an ein in Strömungsrichtung nach dem Messrohr angeordnetes Auslaufrohr anschließbar ist.

Die Atomkerne der Elemente, die einen Kernspin besitzen, besitzen auch ein durch den Kernspin hervorgerufenes magnetisches Moment. Der Kernspin kann als ein durch einen Vektor beschreibbarer Drehimpuls aufgefasst werden, und entsprechend kann auch das magnetische Moment durch einen Vektor beschrieben werden, der parallel zum Vektor des Drehimpulses ist. Der Vektor des magnetischen Moments eines Atomkerns richtet sich bei Anwesenheit eines makroskopischen Magnetfeldes parallel zu dem Vektor des makroskopischen Magnetfeldes an der Stelle des Atomkerns aus. Dabei präzessiert der Vektor des magnetischen Moments des Atomkerns um den Vektor des makroskopischen Magnetfeldes an der Stelle des Atomkerns. Die Frequenz der Präzession wird als Larmorfrequenz ω_{L} bezeichnet und ist proportional zum Betrag der Magnetfeldstärke *B*. Die Larmorfrequenz berechnet sich gemäß ω_{L} = γ · *B*. Darin ist γ das gyromagnetische Verhältnis, welches für Wasserstoffatomkerne maximal ist.

Mess- und Analyseverfahren, welche die Eigenschaft der Präzession von Atomkernen mit einem magnetischen Moment bei Anwesenheit eines makroskopischen Magnetfeldes ausnutzen, werden als kernmagnetische Resonanz-Mess- oder -Analyseverfahren bezeichnet. Der englische Begriff für kernmagnetische Resonanz ist "nuclear magnetic resonance". Für gewöhnlich werden die von den präzessierenden Atomkernen unter verschiedenen Randbedingungen in einer Sensorspule induzierten Spannungen als Ausgangsgröße für die Mess- und -Analyseverfahren verwendet. Ein Beispiel für Messgeräte, welche die kernmagnetische Resonanz ausnutzen, sind die kernmagnetischen Durchflussmessgeräte, die den Durchfluss des durch das Messrohr strömenden mehrphasigen Mediums messen und das Medium analysieren.

Voraussetzung für eine Analyse unter Ausnutzung kernmagnetischer Resonanz ist, dass die zu analysierenden Phasen des Mediums zu unterscheidbaren kernmagnetischen Resonanzen angeregt werden können. Die Analyse kann die Strömungsgeschwindigkeiten der einzelnen Phasen des Mediums und die relativen Anteile der einzelnen Phasen am mehrphasigen Medium umfassen. Kernmagnetische Durchflussmessgeräte können z. B. zur Analyse des aus Ölquellen geförderten mehrphasigen Mediums eingesetzt werden, eines Mediums, das im Wesentlichen aus den Phasen Rohöl, Erdgas und Salzwasser besteht, wobei alle Phasen Wasserstoffatomkerne enthalten.

Die Analyse des aus Ölquellen geförderten Mediums kann auch mit sogenannten Testseparatoren erfolgen. Diese zweigen einen kleinen Teil des geförderten Mediums ab, trennen die einzelnen Phasen des Mediums voneinander und bestimmen die Anteile der einzelnen Phasen an dem Medium. Jedoch sind Testseparatoren nicht im Stande, Rohölanteile kleiner als 5 % zuverlässig zu messen. Da der Rohölanteil einer jeden Quelle stetig absinkt und der Rohölanteil einer Vielzahl von Quellen bereits geringer als 5 % ist, ist es derzeit nicht möglich, diese Quellen unter Verwendung von Testseparatoren wirtschaftlich auszubeuten. Um auch Quellen mit einem sehr geringen Rohölanteil weiterhin ausbeuten zu können, sind also entsprechend genaue Durchflussmessgeräte erforderlich.

Kernmagnetische Durchflussmessgeräte können den Anforderungen einer Vielzahl von Anwendungen genügen, wie zum Beispiel bei der Messung des Durchflusses des aus einer Quelle geförderten mehrphasigen Mediums durch das Messrohr und bei der Bestimmung der Anteile von Rohöl, Erdgas und Salzwasser in dem Medium. Auch Rohölanteile geringer als 5 % sind mit kernmagnetischen Durchflussmessgeräten messbar.

Damit kernmagnetische Durchflussmessgeräte die für viele Anwendungen notwendige Messgenauigkeit erreichen, ist eine Kalibrierung der Durchflussmessgeräte erforderlich, in der die Kalibrierparameter bestimmt werden. Wie bei jedem anderen Messgerät ist auch bei kernmagnetischen Durchflussmessgeräten ein Wiederholen der Kalibrierung in regelmäßigen zeitlichen Abständen notwendig, um die mögliche Messgenauigkeit auch fortdauernd zu erreichen. Aus dem Stand der Technik bekannte Kalibrierverfahren und Kalibriervorrichtungen sehen dabei vor, dass das zu kalibrierende Durchflussmessgerät an eine Kalibriervorrichtung angeschlossen wird und mittels eines Kalibrierverfahrens kalibriert wird.

Die Kalibiervorrichtung ist zur Erzeugung von verschiedenen bekannten Durchflüssen von verschiedenen Medien durch das Messrohr des Durchflussmessgeräts ausgebildet. Als Medien können einphasige oder mehrphasige Medien mit bekannten Anteilen der einzelnen Phasen in dem jeweiligen Medium zum Einsatz kommen, wobei insbesondere die Kenntnis der kernmagnetischen Resonanzeigenschaften der Medien erforderlich ist. Ein Kalibrierverfahren kann Messungen durch das Durchflussmessgerät bei verschiedenen Durchflüssen mit verschiedenen Medien umfassen. Aus den Messwerten der Messungen und den dazugehörigen bekannten Durchflüssen und Eigenschaften der Medien können die Kalibrierparameter des Durchflussmessgeräts gewonnen werden.

Für das kernmagnetische Durchflussmessgerät gilt, dass dem Messrohr eine Mediumsumleitung zugeordnet ist, dass zu der Mediumsumleitung ein Umleitungsrohr, ein Einlaufventil oder / und ein Auslaufventil gehören und dass für einen Kalibrierbetrieb das Umleitungsrohr einerseits mit dem Einlaufrohr und andererseits mit dem Auslaufrohr verbindbar ist, und zwar über das Einlaufventil, über das Auslaufventil oder über das Einlaufventil und über das Auslaufventil.

Nachfolgend wird in Verbindung mit dem kernmagnetischen Durchflussmessgerät immer ausgeführt, dass zu der Mediumsumleitung neben dem Umleitungsrohr zwei Ventile gehören, nämlich ein Einlaufventil und ein Auslaufventil. Funktionsfähig ist das kernmagnetische Durchflussmessgerät aber auch dann, wenn, wie zuvor ausgeführt, zu der Mediumsumleitung nur ein Ventil gehört, also entweder ein Einlaufventil - in Strömungsrichtung vor dem Messrohr - oder ein Auslaufventil - in Strömungsrichtung hinter dem Messrohr. Gehört zu der Mediumsumleitung neben dem Umleitungsrohr nur ein Einlaufventil, also kein Auslaufventil, dann ist das Umleitungsrohr auslaufseitig direkt mit dem Auslaufrohr verbunden. Umgekehrt gilt für den Fall, dass zu der Mediumsumleitung neben dem Umleitungsrohr nur ein Auslassventil gehört, also kein Einlaufventil, dann ist das Umleitungsrohr einlaufseitig direkt mit dem Einlaufrohr verbunden.

Aus der US 2011/0301899 A1 ist ein Mehrphasendurchflussmessgerät bekannt. Das Mehrphasendurchflussmessgerät umfasst ein Venturidurchflussmessgerät und ein Messgerät zur Messung wenigstens einer Eigenschaft, vorzugsweise der Anteile der Phasen, eines mehrphasigen Mediums, das durch ein Rohr fließt. Sie offenbart darüber hinaus ein Kalibrierverfahren für das Mehrphasendurchflussmessgerät. Das Kalibrierverfahren ist erforderlich, um die Anteile der einzelnen Phasen des mehrphasigen Mediums am Medium ausreichend genau bestimmen zu können.

Ein Nachteil ist, dass das zu kalibrierende kernmagnetische Durchflussmessgerät in regelmäßigen Zeitabständen von der Messstelle in der Anwendung ausgebaut und zur Kalibriervorrichtung transportiert werden muss, ein Vorgang, der zum einen sehr aufwendig und kostenintensiv ist und zum anderen den Ablauf der Anwendung stört.

Aus der US 3,425,262 ist ein Kalibrierverfahren für ein Durchflussmessgerät mit einem von einem mehrphasigen Medium durchströmbaren Messrohr bekannt. Dabei ist das Messrohr an ein in Strömungsrichtung des Mediums vor dem Messrohr angeordneten Einlaufrohr und an ein in Strömungsrichtung nach dem Messrohr angeordneten Auslaufrohr anschließbar. Des Weiteren ist dem Messrohr eine Mediumsumleitung zugeordnet, wobei zu der Mediumsumleitung ein Umleitungsrohr, ein Einlaufventil und ein Auslaufventil gehören. Für einen Kalibrierbetrieb ist das Umleitungsrohr einerseits mit dem Einlaufrohr und andererseits mit dem Auslaufrohr verbindbar, und zwar über das Einlaufventil und das Auslaufventil. Eine Pumpe erzeugt einen bekannten Durchfluss mit dem das Durchflussmessgerät kalibriert wird. Weiter erfordert das Kalibrierverfahren einen Ausgleichsbehälter für ein der Pumpe gefördertes Volumen des Mediums. Ein Nachteil ist, dass eine Pumpe und ein Ausgleichsbehälter notwendig sind.

Aufgabe der vorliegenden Erfindung ist die Angabe eines Kalibrierverfahrens für das kernmagnetische Durchflussmessgerät, bei dem zumindest einer der zuvor aufgezeigten Nachteile zumindest abgemildert ist, das also weniger aufwendig und kostenintensiv ist und bei dem das von Zeit zu Zeit erforderliche Kalibrieren den Ablauf der Anwendung, also das eigentliche Durchflussmessen, nicht oder im Wesentlichen nicht stört.

Das erfindungsgemäße Kalibrierverfahren, das die zuvor hergeleitete und aufgezeigte Aufgabe löst, ist zunächst und im wesentlichen dadurch gekennzeichnet, dass das Durchflussmessgerät einerseits in einem Messbetrieb und andererseits im Kalibrierbetrieb arbeiten kann.

Weiter wird im Messbetrieb das Medium vom Einlaufrohr über das Einlaufventil der Mediumsumleitung in das Messrohr und vom Messrohr über das Auslaufventil der Mediumsumleitung in das Auslaufrohr geführt und im Kalibrierbetrieb wird das Medium vom Einlaufrohr über das Einlaufventil der Mediumsumleitung in das Umleitungsrohr und vom Umleitungsrohr über das Auslaufventil der Mediumsumleitung in das Auslaufrohr geführt.

Zu jedem Kalibrierverfahren gehört die Durchführung von Messungen, um mit dabei gewonnenen Messwerten die Messgenauigkeit der eigentlichen Durchflussmessung verbessern zu können. Folglich gehört zum erfindungsgemäßen Kalibrierverfahren auch, dass im Kalibrierbetrieb von dem Durchflussmessgerät Messungen an dem im Messrohr stehenden Medium durchgeführt werden. Die an dem im Messrohr stehenden Medium durchgeführten Messungen werden dann zur Erhöhung der Genauigkeit der an dem im Messrohr stehenden Medium durchgeführten Messungen verwendet.

Bei dem erfindungsgemäßen Kalibrierverfahren können an dem im Messrohr stehenden Medium verschiedene Parameter bestimmt werden, insbesondere die Spin-Gitter-Relaxationszeit jeder der Phasen des Mediums, die Spin-Spin-Relaxationszeit jeder der Phasen des Mediums, der Volumenanteil jeder der Phasen des Mediums und/oder der Massenanteil jeder der Phasen des Mediums. Im Einzelnen kann der Massenanteil jeder der Phasen des Mediums aus dem Verlauf des Spin-Gitter-Relaxationssignals über der Zeit und/oder aus dem Verlauf des Spin-Spin-Relaxationssignals über der Zeit bestimmt werden.

Im Einzelnen gibt es verschiedene Möglichkeiten, das erfindungsgemäße Kalibrierverfahren auszugestalten und weiterzubilden. Dazu wird verwiesen einerseits auf die dem unabhängigen Patentanspruch nachgeordneten Patentansprüche und andererseits auf das nachfolgend beschriebene, in der nur eine Figur enthaltenen Zeichnung dargestellte Ausführungsbeispiel.

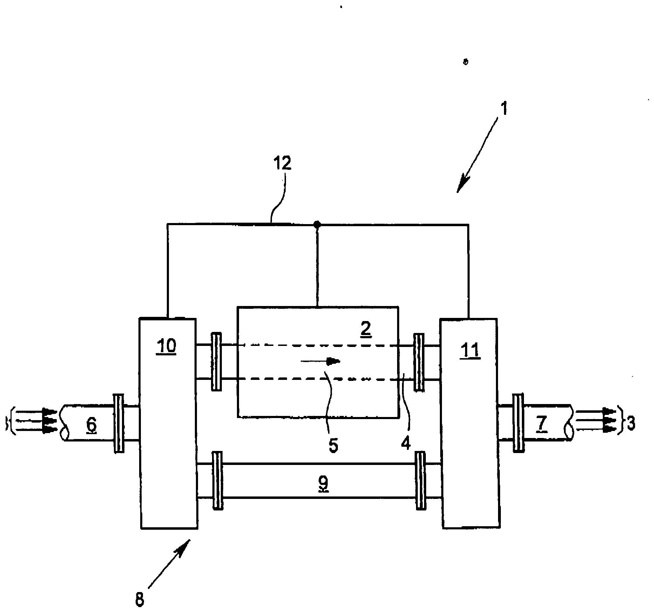

Die Figur zeigt die schematische Darstellung eines Ausführungsbeispiels eines kernmagnetischen Durchflussmessgeräts 2 mit einer Kalibriervorrichtung 1. Zu dem kernmagnetischen Durchflussmessgerät 2 gehört ein von einem mehrphasigen Medium 3 durchströmbares Messrohr 4. Das Messrohr 4 ist an ein in Strömungsrichtung 5 des Mediums 3 vor dem Messrohr 4 angeordnetes Einlaufrohr 6 und an ein in Strömungsrichtung 5 des Mediums 3 nach dem Messrohr 4 angeordnetes Auslaufrohr 7 anschließbar. Ist das Messrohr 4 sowohl an das Einlaufrohr 6 als auch an das Auslaufrohr 7 angeschlossen, entspricht der Aufbau einem aus dem Stand der Technik bekannten Aufbau zur Durchflussmessung und Analyse des durch das Messrohr 4 strömenden mehrphasigen Mediums 3 mit Hilfe des kernmagnetischen Durchflussmessgeräts 2.

Die zu dem kernmagnetischen Durchflussmessgerät 2 gehörende Kalibriervorrichtung 7 besteht im Wesentlichen aus einer Mediumsumleitung 8, zu der ein Umleitungsrohr 9, ein Einlaufventil 10 und ein Auslaufventil 11 gehören. Das Einlaufventil 10 ist mit dem Messrohr 4, dem Einlaufrohr 6 und dem Umleitungsrohr 9 verbunden, während das Auslaufventil 11 mit dem Messrohr 4, dem Auslaufrohr 7 und dem Umleitungsrohr 9 verbunden ist.

Im Messbetrieb des Durchflussmessgeräts 2 strömt das Medium 3 vom Einlaufrohr 6 über das Einlaufventil 10 in das Messrohr 4 und vom Messrohr 4 über das Auslaufventil 11 in das Auslaufrohr 7. Es fließt also kein Medium 3 an dem Messrohr 4 vorbei, also kein Medium 3 über die Mediumsumleitung 8.

Im Kalibrierbetrieb des kernmagnetischen Durchflussmessgeräts 2 strömt das Medium 3 vom Einlaufrohr 6 über das für den Kalibrierbetrieb eingestellte Einlaufventil 10 in das Umleitungsrohr 9 und von dem Umleitungsrohr 9 über das für den Kalibrierbetrieb eingestellte Auslassventil 11 in das Auslaufrohr 7. Es fließt also kein Medium 3 durch das Messrohr 4. Vielmehr steht das im Messrohr 4 vorhandene Medium 3 still. Die für das erfindungsgemäße Kalibrierverfahren notwendigen Messungen an dem im Messrohr 4 eingeschlossenen und stehenden Medium 3 können von dem Durchflussmessgerät 2 durchgeführt werden.

Im dargestellten Ausführungsbeispiel weist das kernmagnetische Durchflussmessgerät 2 zur Steuerung des Einlaufventils 10 der Mediumsumleitung 8 und des Auslaufventils 11 der Mediumsumleitung 8 Steuerleitungen 12 auf. Selbstverständlich kann die Steuerung des Einlaufventils 10 der Mediumsumleitung 8 und die Steuerung des Auslaufventils 11 der Mediumsumleitung 8 auch durch separate Steuermittel erfolgen.

Das Einlaufventil 10 der Mediumsumleitung 8 und das Auslaufventil 11 der Mediumsumleitung 8 sind derart ausgestaltet, dass die Strömung des Mediums 3 im Einlaufrohr 6 und im Auslaufrohr 7 auch beim Wechsel vom Messbetrieb in den Kalibrierbetrieb und umgekehrt nicht wesentlich beeinträchtigt wird. Der Messbetrieb des Durchflussmessgeräts 2 wird folglich durch von Zeit zu Zeit erforderliche Kalibrierungen des Durchflussmessgeräts 2 nur in der Weise beeinträchtigt, als für jeweils kurze Zeitspannen keine Durchflussmessungen und Analysen des Mediums 3 durch das Durchflussmessgeräts 2 vorgenommen werden können.

Ausgehend vom Messbetrieb beginnt im dargestellten Ausführungsbeispiel eine Kalibrierung damit, dass zunächst das Einlaufventil 10 der Mediumsumleitung 8 und das Auslaufventil 11 der Mediumsumleitung 8 so eingestellt werden, wie es der Kalibrierbetrieb erfordert. Dadurch wird, wie bereits ausgeführt, die Strömung des Mediums 3 im Messrohr 4 unterbunden. Anschließend werden die Spin-Gitter-Relaxationszeit, die Spin-Spin-Relaxationszeit, der Wasserstoffindex, der Volumenanteil und der Massenanteil jeder der Phasen des Mediums 3 im Messrohr 4 bestimmt. Danach werden dann das Einlaufventil 10 der Mediumsumleitung 8 und das Auslaufventil 11 der Mediumsumleitung 8 so eingestellt, wie es für den Messbetrieb des Durchflussmessgeräts 2 erforderlich ist, so dass also das Medium 3 wieder in das Messrohr 4 und durch das Messrohr 4 strömen kann.

### Bezugszeichen:

- 1.: Kalibriervorrichtung
- 2.: kernmagnetisches Durchflussmessgerät
- 3.: mehrphasiges Medium
- 4.: Messrohr
- 5.: Strömungsrichtung
- 6.: Einlaufrohr
- 7.: Auslaufrohr
- 8.: Mediumsumleitung
- 9.: Umleitungsrohr
- 10.: Einlaufventil
- 11.: Auslaufventil
- 12.: Steuerleitungen

## Patentansprüche

1. Kalibrierverfahren für ein kernmagnetisches Durchflussmessgerät (2) mit einem von einem mehrphasigen Medium (3) durchströmbaren Messrohr (4),
wobei das Messrohr (4) an ein in Strömungsrichtung (5) des Mediums (3) vor dem Messrohr (4) angeordneten Einlaufrohr (6) und an ein in Strömungsrichtung (5) nach dem Messrohr (4) angeordneten Auslaufrohr (7) anschließbar ist,
wobei dem Messrohr (4) eine Mediumsumleitung (8) zugeordnet ist,
wobei zu der Mediumsumleitung (8) ein Umleitungsrohr (9), ein Einlaufventil (10) oder / und ein Auslaufventil (11) gehören und
wobei für einen Kalibrierbetrieb das Umleitungsrohr (9) einerseits mit dem Einlaufrohr (6) und andererseits mit dem Auslaufrohr (7) verbindbar ist, und zwar über das Einlaufventil (10) oder über das Auslaufventil (11) oder über das Einlaufventil (10) und über das Auslaufventil (11),
**dadurch gekennzeichnet,**
**dass** das Durchflussmessgerät (2) einerseits in einem Messbetrieb und andererseits im Kalibrierbetrieb arbeiten kann,
wobei im Messbetrieb das Medium (3) vom Einlaufrohr (6) über das Einlaufventil (10) der Mediumsumleitung (8) in das Messrohr (4) und vom Messrohr (4) über das Auslaufventil (11) der Mediumsumleitung (8) in das Auslaufrohr (7) geführt wird und im Kalibrierbetrieb das Medium (3) vom Einlaufrohr (6) über das Einlaufventil (10) der Mediumsumleitung (8) in das Umleitungsrohr (9) und vom Umleitungsrohr (9) über das Auslaufventil (11) der Mediumsumleitung (8) in das Auslaufrohr (7) geführt wird und
wobei im Kalibrierbetrieb von dem Durchflussmessgerät (2) Messungen an dem im Messrohr (4) stehenden Medium (3) durchgeführt werden.

2. Kalibrierverfahren nach Anspruch 1, **dadurch gekennzeichnet, dass** die Spin-Gitter-Relaxationszeit (T₁) jeder der Phasen des Mediums (3) bestimmt wird.

3. Kalibrierverfahren nach Anspruch 1 oder 2, **dadurch gekennzeichnet, dass** die Spin-Spin-Relaxationszeit (T₂) jeder der Phasen des Mediums (3) bestimmt wird.

4. Kalibrierverfahren nach einem der Ansprüche 1 bis 3 **dadurch gekennzeichnet, dass** der Volumenanteil jeder der Phasen des Mediums (3) bestimmt wird.

5. Kalibrierverfahren nach einem der Ansprüche 1 bis 4 **dadurch gekennzeichnet, dass** der Massenanteil jeder der Phasen des Mediums (3) bestimmt wird.

6. Kalibrierverfahren nach einem der Ansprüche 1 bis 5, **dadurch gekennzeichnet, dass** der Massenanteil jeder der Phasen des Mediums (3) aus dem Verlauf des Spin-Gitter-Relaxationssignals über der Zeit bestimmt wird.

7. Kalibrierverfahren nach einem der Ansprüche 1 bis 6, **dadurch gekennzeichnet, dass** der Massenanteil jeder der Phasen des Mediums (3) aus dem Verlauf des Spin-Spin-Relaxationssignals über der Zeit bestimmt wird.

8. Kalibrierverfahren nach einem der Ansprüche 1 bis 7, **dadurch gekennzeichnet, dass** das Kalibrierverfahren in regelmäßigen Zeitabständen durchgeführt wird.

## Claims

1. Calibration method for a nuclear magnetic flowmeter (2) with a measuring tube (4) through which a multiphase medium (3) can flow,
wherein the measuring tube (4) can be connected to an inlet tube (6) arranged upstream of the measuring tube (4) in the flow direction (5) of the medium (3) and to an outlet tube (7) arranged downstream of the measuring tube (4) in the flow direction (5),
wherein a medium bypass (8) is assigned to the measuring tube (4),
wherein the medium bypass (8) includes a bypass tube (9), an inlet valve (10) and/or an outlet valve (11), and
wherein for a calibration mode, the bypass tube (9) can be connected on the one hand to the inlet tube (6) and on the other hand to the outlet tube (7), namely via the inlet valve (10) or via the outlet valve (11) or via the inlet valve (10) and via the outlet valve (11),
**characterized in**
**that** the flowmeter (2) can operate in a measuring mode on the one hand and in a calibration mode on the other hand
wherein, in the measuring mode, the medium (3) is led from the inlet tube (6) via the inlet valve (10) of the medium bypass (8) into the measuring tube (4) and from the measuring tube (4) via the outlet valve (11) of the medium bypass (8) into the outlet tube (7) and, in the calibration mode, the medium (3) is led from the inlet tube (6) via the inlet valve (10) of the medium bypass (8) into the bypass tube (9) and from the bypass tube (9) via the outlet valve (11) of the medium bypass (8) into the outlet tube (7), and
wherein during calibration, operation measurements are performed by the flowmeter (2) on the medium (3) residing in the measuring tube (4).

2. Calibration method according to claim 1, **characterized in that** the spin-lattice relaxation time (T₁) of each of the phases of the medium (3) is determined.

3. Calibration method according to claim 1 or 2, **characterized in that** the spin-spin relaxation time (T₂) of each of the phases of the medium (3) is determined.

4. Calibration method according to any one of claims 1 to 3, **characterized in that** the volume fraction of each of the phases of the medium (3) is determined.

5. Calibration method according to any one of claims 1 to 4, **characterized in that** the mass fraction of each of the phases of the medium (3) is determined.

6. Calibration method according to any one of claims 1 to 5, **characterized in that** the mass fraction of each of the phases of the medium (3) is determined from the course of the spin-lattice relaxation signal over time.

7. Calibration method according to any one of claims 1 to 6, **characterized in that** the mass fraction of each of the phases of the medium (3) is determined from the course of the spin-spin relaxation signal over time.

8. Calibration method according to any one of claims 1 to 7, **characterized in that** the calibration method is performed at regular time intervals.

## Revendications

1. Procédé d'étalonnage pour un débitmètre à résonance magnétique nucléaire (2) comprenant un tube de mesure (4) pouvant être traversé par un milieu polyphasique (3),
dans lequel le tube de mesure (4) peut être raccordé à un tube d'entrée (6) disposé en amont du tube de mesure (4) dans la direction d'écoulement (5) du milieu (3), et à un tube de sortie (7) disposé en aval du tube de mesure (4) dans la direction d'écoulement (5),
dans lequel une dérivation de milieu (8) est associée au tube de mesure (4),
dans lequel la dérivation de milieu (8) comprend un tube de dérivation (9), une vanne d'entrée (10) et/ou une vanne de sortie (11), et
dans lequel, pour un mode d'étalonnage, le tube de dérivation (9) peut être relié d'une part au tube d'entrée (6) et d'autre part au tube de sortie (7), notamment par l'intermédiaire de la vanne d'entrée (10) ou par l'intermédiaire de la vanne de sortie (11) ou bien par l'intermédiaire de la vanne d'entrée (10) et par l'intermédiaire de la vanne de sortie (11),
**caractérisé en ce que** le débitmètre (2) peut fonctionner d'une part dans un mode de mesure et d'autre part dans le mode d'étalonnage,
dans lequel, en mode de mesure, le milieu (3) est guidé du tube d'entrée (6) par l'intermédiaire de la vanne d'entrée (10) de la dérivation de milieu (8) dans le tube de mesure (4) et du tube de mesure (4) par l'intermédiaire de la vanne de sortie (11) de la dérivation de milieu (8) dans le tube de sortie (7), et en mode d'étalonnage, le milieu (3) est guidé du tube d'entrée (6) par l'intermédiaire de la vanne d'entrée (10) de la dérivation de milieu (8) dans le tube de dérivation (9) et du tube de dérivation (9) par l'intermédiaire de la vanne de sortie (11) de la dérivation de milieu (8) dans le tube de sortie (7), et
dans lequel, en mode d'étalonnage, le débitmètre (2) effectue des mesures sur le milieu (3) se trouvant dans le tube de mesure (4).

2. Procédé d'étalonnage selon la revendication 1, **caractérisé en ce que** le temps de relaxation spin-réseau (T₁) de chacune des phases du milieu (3) est déterminé.

3. Procédé d'étalonnage selon la revendication 1 ou 2, **caractérisé en ce que** le temps de relaxation spin-spin (T₂) de chacune des phases du milieu (3) est déterminé.

4. Procédé d'étalonnage selon l'une quelconque des revendications 1 à 3, **caractérisé en ce que** le pourcentage en volume de chacune des phases du milieu (3) est déterminé.

5. Procédé d'étalonnage selon l'une quelconque des revendications 1 à 4, **caractérisé en ce que** le pourcentage en masse de chacune des phases du milieu (3) est déterminé.

6. Procédé d'étalonnage selon l'une quelconque des revendications 1 à 5, **caractérisé en ce que** le pourcentage en masse de chacune des phases du milieu (3) est déterminé à partir de la courbe du signal de relaxation spin-réseau par rapport au temps.

7. Procédé d'étalonnage selon l'une quelconque des revendications 1 à 6, **caractérisé en ce que** le pourcentage en masse de chacune des phases du milieu (3) est déterminé à partir de la courbe du signal de relaxation spin-spin par rapport au temps.

8. Procédé d'étalonnage selon l'une quelconque des revendications 1 à 7, **caractérisé en ce que** le procédé d'étalonnage est effectué à intervalles réguliers.
